(19) **Europäisches Patentamt / European Patent Office / Office européen des brevets**

(11) **EP 1 933 556 A2**

(12) **EUROPEAN PATENT APPLICATION**

(43) Date of publication:
**18.06.2008 Bulletin 2008/25**

(51) Int Cl.:
***H04N 5/775*** *(2006.01)*

(21) Application number: **07013825.0**

(22) Date of filing: **13.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **15.12.2006 US 611613**

(71) Applicant: **Broadcom Corporation Irvine, CA 92617 (US)**

(72) Inventor: **Neuman, Darren Palo Alto, CA 94301 (US)**

(74) Representative: **Jehle, Volker Armin Bosch Graf von Stosch Jehle Patentanwaltsgesellschaft mbH Flüggenstrasse 13 80639 München (DE)**

(54) **TV user interface and processing for personal video players**

(57)     Methods and systems for providing a video interface between a handheld video player (106) and a television (100) are disclosed herein. Aspects of the method may include activating a video processing interface that enables processing of input video signals in a compressed format suitable for display on a handheld video player (106); and generating corresponding output video signals suitable for display on a television (100). The input signal may be received via a dedicated connector (103) on the television (100). The activation of the video processing system may utilize a menu selectable software button or a hardware selector video input button. The dedicated connector may be labeled (105) on the television (100). The processing of the video input signal may utilize digital noise reduction (DNR) such as mosquito noise reduction (MNR) and block noise reduction (BNR). The video signal processing may comprise compression artifact reduction. The video signal processing may also utilize digital contour noise reduction (DCR), motion adaptive deinterlace (MAD), and image sharpening utilizing transient adjustment block (TAB).

FIG. 1

EP 1 933 556 A2

**Description**

CROSS-REFERENCE TO RELATED APPLICATIONS/INCORPORATION BY REFERENCE

This application makes reference to:

United States Patent Application Serial No. 10/929628 (Attorney Docket No. 15445US02) filed August 30, 2004;

United States Patent Application Serial No. 10/945756 (Attorney Docket No. 15450US02) filed September 21, 2005;

United States Patent Application Serial No. 11/087491 (Attorney Docket No. 16317US02) filed March 22, 2005;

Each of the above stated applications is hereby incorporated herein by reference in its entirety.

FEDERALLY SPONSORED RESEARCH OR DEVELOPMENT

[Not Applicable]

[MICROFICHE/COPYRIGHT REFERENCE]

[Not Applicable]

FIELD OF THE INVENTION

Certain embodiments of the invention relate to portable video devices and video processing. More specifically, certain embodiments of the invention relate to a method and system for TV user interface and processing for personal video players.

BACKGROUND OF THE INVENTION

Advances in compression techniques for audio-visual information have resulted in cost effective and widespread recording, storage, and/or transfer of movies, video, and/or music content over a wide range of media. The Moving Picture Experts Group (MPEG) family of standards is among the most commonly used digital compressed formats. A major advantage of MPEG compared to other video and audio coding formats is that MPEG-generated files tend to be much smaller for the same quality. This is because MPEG uses very sophisticated compression techniques. However, MPEG compression may be lossy and, in some instances, it may distort the video content. In this regard, the more the video is compressed, that is, the higher the compression ratio, the less the reconstructed video resembles the original information. Some examples of MPEG video distortion are a loss of texture, detail, and/or edges. MPEG compression may also result in ringing on sharper edges and/or discontinuities on block edges. Because MPEG compression techniques are based on defining blocks of video image samples for processing, MPEG compression may also result in visible "macroblocking" that may result due to bit errors. In MPEG, a macroblock is the area covered by a 16X16 array of luma samples in a video image. Luma may refer to a component of the video image that represents brightness. Moreover, noise due to quantization operations, as well as aliasing and/or temporal effects may all result from the use of MPEG compression operations.

When MPEG video compression results in loss of detail in the video image it is said to "blur" the video image. In this regard, operations that are utilized to reduce compression-based blur are generally called image enhancement operations. When MPEG video compression results in added distortion on the video image it is said to produce "artifacts" on the video image. For example, the term "mosquito noise" may refer to MPEG artifacts that may be caused by the quantization of high spatial frequency components in the image. Mosquito noise may also be referred to as "ringing" or "Gibb's effect."

In 8-bit video systems, for example, MPEG video compression may also result in digital image contours or bands on smooth gradients. Digital image contours may correspond to noise of one to three quantization levels, that is, low-level contours in a video signal. For example, digital image contours may be visible in both luma and chroma, with noise of one quantization level in chroma U and V components easily translating into noise of 2 or 3 quantization levels in R, G, or B components.

Video artifacts may be more pronounced depending on the video content or the display environment. For example, on a static video scene the artifacts generated by processing operations may be static, such as mosquito noise, or may be dynamic, such as analog-to-digital conversion (ADC noise). Digital image contours, for example, may be accentuated by large, sharp, high-contrast, high-resolution video displays. Digital image contours corresponding to one quantization level may be easiest to see in dark images or in a dark room. Digital image contours may also be easier to see when there is spatial and/or temporal correlation. Moreover, digital image contours may be accentuated by digital video processing operations such as contrast, sharpening, and/or improper rounding, for example.

There may be several differences between mosquito noise, block noise, and/or digital image contours. Mosquito noise, for example, is a block-based coding artifact that appears near strong edges as very high frequency spots or fuzz. Block noise is also a block-based coding artifact generally caused by the quantization of discrete cosine transform (DCT) coefficients and appears as a strong screen window. Digital image contours instead may occur from the quantization of video data to 256 levels, that is, to 8-bit values and it is generally visible as long, faint lines or blocks in flat regions. When a higher contrast or a sharper image setting is selected in a video display, for example, the presence of digital image contours may be more visible to a viewer.

In handheld video players, such as iPods or other portable devices, the video data is highly compressed to reduce storage requirements. This compression leads to artifacts in digital noise, which when viewed on the small screen of a handheld video player, do not significantly affect the viewing enjoyment. However, when this video is displayed on larger television screens, the artifacts become increasingly noticeable and significantly reduce the viewing enjoyment.

Further limitations and disadvantages of conventional and traditional approaches will become apparent to one of skill in the art, through comparison of such systems with the present invention as set forth in the remainder of the present application with reference to the drawings.

BRIEF SUMMARY OF THE INVENTION

A system and/or method for TV user interface and processing for personal video, substantially as shown in and/or described in connection with at least one of the figures, as set forth more completely in the claims.

According to an aspect of the invention, a method for providing a video interface between a handheld video player and a television is provided, the method comprising:

activating a video processing interface that enables processing of input video signals in a decompressed analog format from said handheld video player; and

generating, from said input video signals, corresponding output video signals suitable for display on a television, wherein said input video signals are received via a dedicated connector on said television.

Advantageously, the method further comprises activating said video processing interface utilizing at least one of: a menu selectable software button or a hardware selector video input button.

Advantageously, said dedicated connector is labeled on said television.

Advantageously, the method further comprises processing said input video signals utilizing Digital Noise Reduction (DNR).

Advantageously, said DNR comprises Mosquito Noise Reduction (MNR).

Advantageously, said DNR comprises Block Noise Reduction (BNR).

Advantageously, said processing comprises compression artifact reduction.

Advantageously, the method further comprises processing said input video signals utilizing Digital Contour Noise Reduction (DCR).

Advantageously, the method further comprises processing said input video signals utilizing Motion Adaptive Deinterlace (MAD).

Advantageously, the method further comprises processing said input video signals utilizing image sharpening.

Advantageously, said image sharpening comprises Transient Adjustment Block (TAB).

According to an aspect of the invention, a system for providing a video interface between a handheld video player and a television comprises:

a video processing interface that enables processing of input video signals in a decompressed analog format suitable for display on said handheld video player; and

one or more circuits that generate, from said input signals, output video signals suitable for display on a television wherein said input video signals are received by a dedicated connector on said television.

Advantageously, the system further comprises at least one of: a menu selectable software button or a hardware selector video input button.

Advantageously, said dedicated connector is labeled on said television.

Advantageously, the system further comprises circuitry for digital noise reduction on said input video signal.

Advantageously, said digital noise reduction circuitry comprises Mosquito Noise Reduction (MNR)

Advantageously, said digital noise reduction circuitry comprises Block Noise Reduction (BNR).

Advantageously, said processing comprises compression artifact reduction.

Advantageously, the system further comprises circuitry for Digital Contour Noise Reduction (DCR).

Advantageously, the system further comprises circuitry for Motion Adaptive Deinterlace (MAD).

Advantageously, the system further comprises circuitry for image sharpening.

Advantageously, said image sharpening circuitry comprises Transient Adjustment Block (TAB).

Various advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1 is a block diagram of a front panel of a television set with a handheld video player interface, in accordance with an embodiment of the invention.

FIG. 2A is a block diagram of an exemplary handheld video player interface, in accordance with an embodiment of the invention.

FIG. 2B is a block diagram of an exemplary handheld video player comprising integrated processing of video, in accordance with an embodiment of the invention.

FIG. 3 is a block diagram of an exemplary top-level portioning of the DNR, in accordance with an embodiment of the invention.

FIG. 4 is a block diagram illustrating an exemplary MNR filter block, in accordance with an embodiment of the invention.

FIG. 5 is a flow diagram illustrating exemplary steps for the determination of an MNR difference parameter, in accordance with an embodiment of the invention.

FIG. 6 is a block diagram illustrating an exemplary architecture for a digital contour removal system, in accordance with an embodiment of the invention.

FIG. 7 is a flow diagram illustrating exemplary steps for digital contour removal in video images, in accordance with an embodiment of the invention.

FIG. 8 is a block diagram of an exemplary motion adaptive deinterlacer, in accordance with an embodiment of the invention.

FIG. 9 is a block diagram of an exemplary transient adjustment block (TAB), in accordance with an embodiment of the invention.

FIG. 10 is a diagram illustrating first and second derivatives plots associated with an exemplary edge, in accordance with an embodiment of the invention.

DETAILED DESCRIPTION OF THE INVENTION

Certain embodiments of the invention may be found in a method and system for providing a video interface between a handheld video player and a television are disclosed herein. Exemplary aspects of the method may comprise activating a video processing interface that enables processing of input video signals in a decompressed format suitable for display on a handheld video player. A corresponding output video signal suitable for display on a television may be generated from the input video signal. The input video signal may be received via a dedicated connector on the television. The dedicated connection may be labeled to indicate a handheld video player source. The activation of the video processing interface may utilize a menu selectable software button or a hardware selector video input button. The processing may comprise compression artifact reduction. Various digital noise reduction (DNR) schemes, such as mosquito noise reduction (MNR) and/or block noise reduction (BNR) may be utilized to process the input video signals. Digital contour noise reduction (DCR), motion adaptive deinterlace (MAD), and/or image sharpening utilizing transient adjustment block (TAB) may be utilized to process the input video signals.

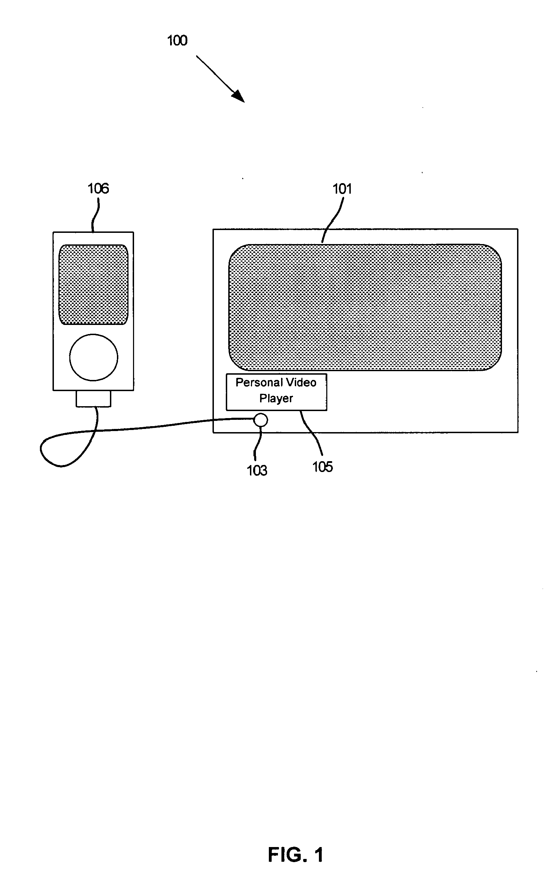

FIG. 1 is a diagram of the front panel of a television with a handheld video player interface, in accordance with an embodiment of the invention. Referring to FIG. 1, there is shown a television front panel 100 and a portable or handheld video player 106. The television front panel comprises a screen 101, a handheld video player connector 103, and a connector label 105. The connector label 105 may be labeled "Portable Video Player", for example. It should be recognized that although the handheld video connector is shown on the front panel of the television, the invention is not limited in this regard. Accordingly, although it may be convenient to have the handheld video player connection 103 located on the front panel of the television for easy access, the handheld video player connector 103 may be located on the side, top or rear of the television. In various embodiments of the invention, the handheld video player connection 103 may be integrated as part of a connector panel often found on many televisions.

In FIG. 1, the portable handheld video player 106 is shown coupled to the television front panel 100 via the handheld video connector 103. A user selection that allows receiving of input video from this connector may activate the appropriate signal processing necessary for processing the decompressed video so that it may be viewed on a television. A user selection interface may comprise a hardware button for video input selection, and/or may be a software button, in a menu screen, for example.

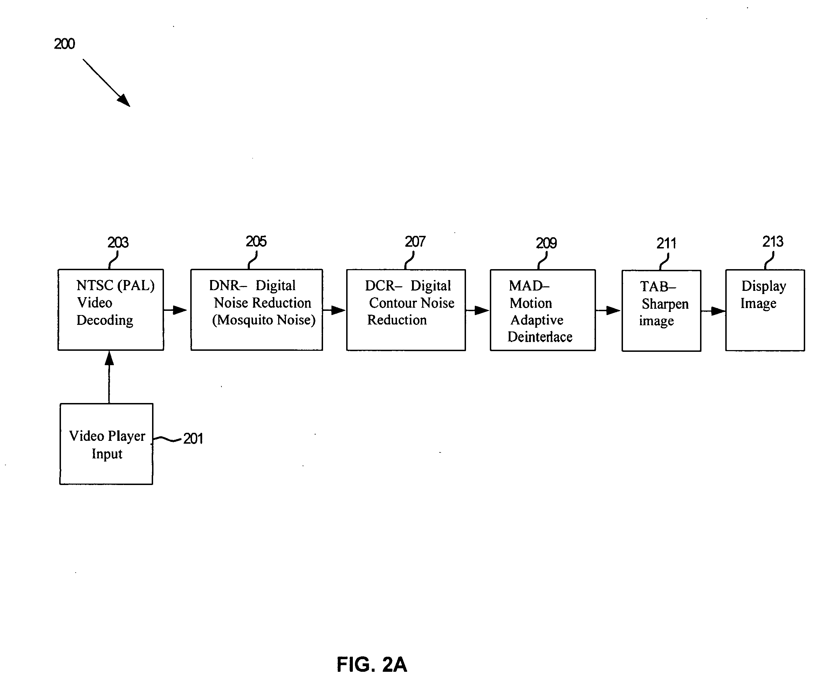

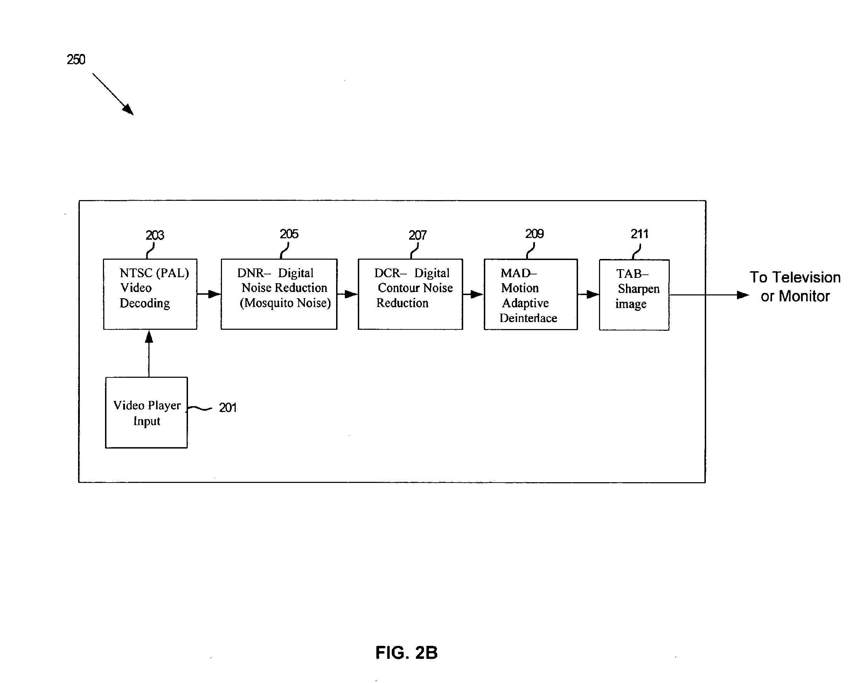

FIG. 2A is a block diagram of an exemplary handheld video player interface, in accordance with an embodiment of the invention. Referring to FIG. 2, there is shown a handheld video player interface comprising a handheld video player input block 201, NTSC (or PAL) video decoder 203, a digital noise reduction (DNR) block 205, Digital Contour Noise Reduction (DCR) block 207, Motion Adaptive Deinterlace (MAD) block 209, Transient Adjustment Block (TAB) image sharpening block 211, and image display block 213.

The handheld video player input 201 may comprise suitable logic, circuitry, and/or code that may be adapted to receive the incoming video signal from a handheld video player, such as an iPod. The video decoder 203 may comprise suitable logic, circuitry, and/or code that may be adapted to decode the incoming decompressed video signal to the appropriate format, such as NTSC or PAL, for example. The DNR block 205 may comprise suitable logic, circuitry, and/or code that may be adapted to reduce some artifacts that may result from MPEG coding. These artifacts may include block noise or mosquito noise. The DCR block 207 may comprise suitable logic, circuitry, and/or code that may be adapted to detect and reduce digital contour noise. The MAD block 209 may comprise suitable logic, circuitry, and/or code that may be adapted to deinterlace video fields. The TAB block 211 may comprise suitable logic, circuitry, and/or code that may be adapted to sharpen a video image. The display image block 213 may comprise suitable logic, circuitry, and/or code that may be adapted to display the output video image. The input signals may comprise images in a format suitable for communication over a video bus (VB) linking each of the blocks in FIG. 2.

In operation, a handheld video player such as an iPod may be coupled to the television front panel 100 via the handheld video player connector 103. Decompressed images in a format suitable for communication over a video bus may be transferred from the handheld video player 106 to the handheld video player interface of FIG. 2A for processing. The video decoder 203 may decode the incoming decompressed video signal to the appropriate format, such as NTSC or PAL, for example. The DNR block 205 may reduce some artifacts that may result from MPEG coding. These artifacts may include block noise and/or mosquito noise. The DCR block 207 may detect and reduce digital contour noise. The MAD block 209 may deinterlace the video fields in the decoded video signals. The TAB block 211 may be utilized to sharpen the resulting processed video image and the display image block 213 may comprise suitable logic, circuitry, and/or code that may be adapted to display the output video image.

FIG. 2B is a block diagram of an exemplary handheld video player comprising integrated processing of video, in accordance with an embodiment of the invention. Referring to FIG. 2B, there is shown a handheld video player interface comprising a handheld video player input block 201, an NTSC (or PAL) video decoder 203, a digital noise reduction (DNR) block 205, a Digital Contour Noise Reduction (DCR) block 207, a motion adaptive deinterlace (MAD) block 209, and a transient adjustment block (TAB) image sharpening block 211. The blocks 201, 203, 205, 207, 209 and 211 are substantially the same as described with respect to FIG. 2A. In this embodiment of the invention, the signal processing blocks may be incorporated into the handheld video player for output to a television or monitor.

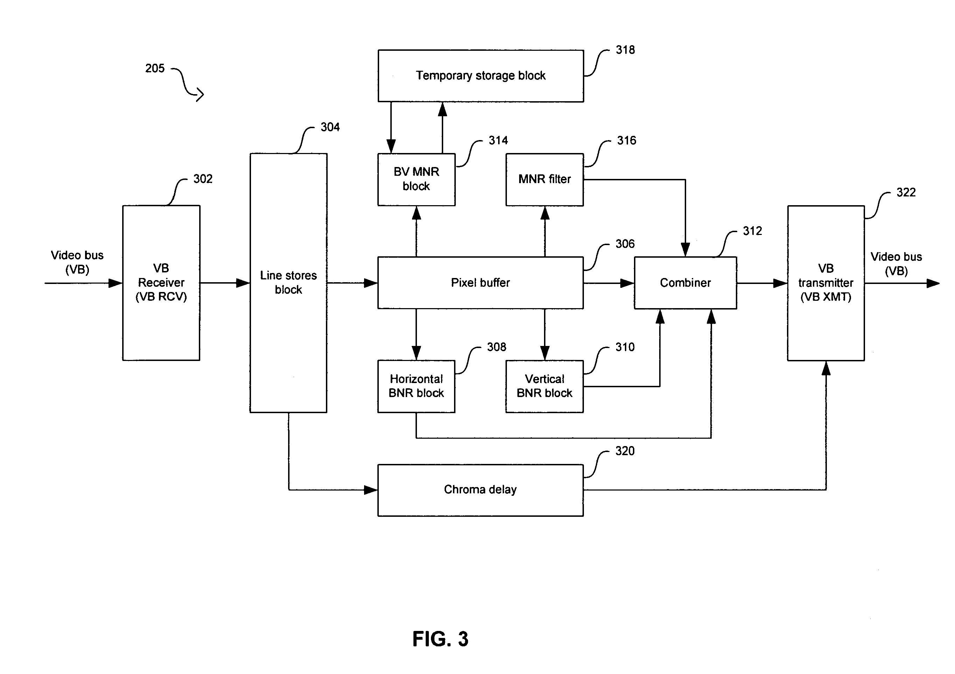

FIG. 3 is a block diagram of an exemplary top-level partitioning of the DNR, in accordance with an embodiment of the invention. Referring to FIG. 3, the DNR block 205 described in FIG. 2 may comprise a VB receiver (VB RCV) 302, line stores block 304, a pixel buffer 306, a combiner 312, a block variance (BV) mosquito noise reduction (MNR) block 314, an MNR filter 316, a temporary storage block 318, a chroma delay block 320, and a VB transmitter (VB XMT) 322. In some instances, the DNR block 205 may also support block noise reduction and may comprise a horizontal block noise reduction (BNR) block 308 and a vertical BNR block 310 for that purpose.

The VB RCV 302 may comprise suitable logic, circuitry, and/or code that may be adapted to receive images in a format that is in accordance with the bus protocol supported by the VB. The VB RCV 302 may also be adapted to convert the received MPEG-coded video images into a different format for transfer to the line stores block 304. The line stores block 304 may comprise suitable logic, circuitry, and/or code that may be adapted to convert raster-scanned luma data from a current video image into parallel lines of luma data. The line stores block 304 may be enabled to operate in a high definition (HD) mode or in a standard definition (SD) mode. Moreover, the line stores block 304 may also be enabled to convert and delay-match raster-scanned chroma information into a single parallel line.

The pixel buffer 306 may comprise suitable logic, circuitry, and/or code that may be adapted to store luma information corresponding to a plurality of pixels from the parallel lines of luma data generated by the line stores block 304. In an exemplary embodiment of the invention, the pixel buffer 306 may be implemented as a shift register. In accordance with one embodiment of the invention, in instances where the DNR block 208 is also enabled to support block noise reduction (BNR), the pixel buffer 306 may be communicatively coupled to the MNR block 314, the MNR filter 316, the horizontal BNR block 308, and the vertical BNR block 310 to save on, for example, floating point operations per second (flops).

The BV MNR block 314 may comprise suitable logic, circuitry, and/or code that may be adapted to determine a block variance parameter for image blocks of a current video image. The BV MNR block 314 may utilize luma information from the pixel buffer 306 and/or other processing parameters. The temporary storage block 318 may comprise suitable logic, circuitry, and/or code that may be adapted to store temporary values determined by the BV MNR block 314. The MNR filter 316 may comprise suitable logic, circuitry, and/or code that may be adapted to determine a local variance parameter based on a portion of the image block being processed and to filter the portion of the image block being processed in accordance with the local variance parameter. The MNR filter 316 may also be adapted to determine a MNR difference parameter that may be utilized to reduce mosquito noise artifacts.

The combiner 312 may comprise suitable logic, circuitry, and/or code that may be adapted to combine the original luma value of an image block pixel from the pixel buffer 306 with a luma value that results from the filtering operation performed by the MNR filter 316. The chroma delay 320 may comprise suitable logic, circuitry, and/or code that may be adapted to delay the transfer of chroma pixel information in the chroma data line to the VB XMT 322 to substantially match the time at which the luma data generated by the combiner 312 is transferred to the VB XMT 322. The VB XMT 322 may comprise suitable logic, circuitry, and/or code that may be adapted to assemble noise-reduced output video signals into a format that is in accordance with the bus protocol supported by the VB.

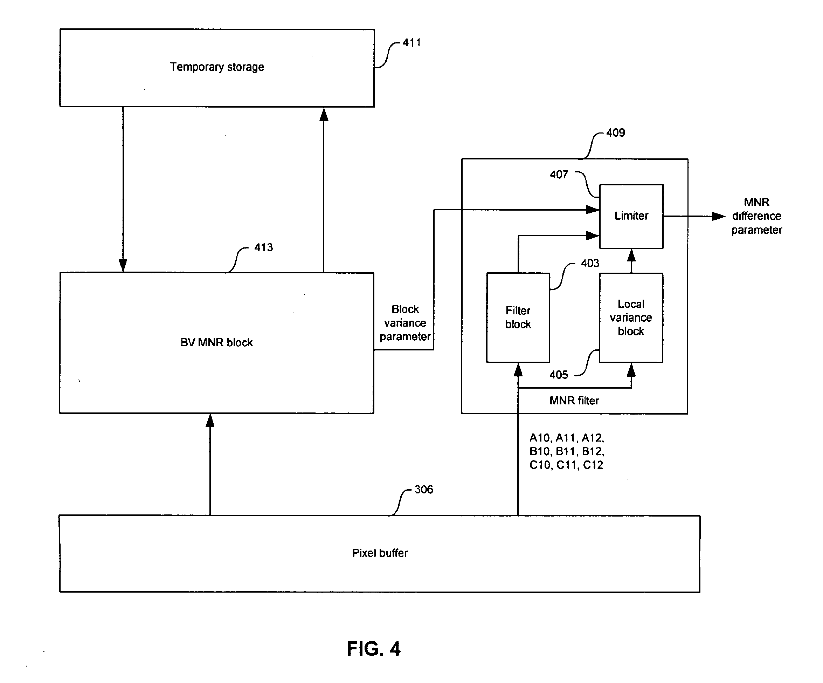

FIG. 4 is a block diagram illustrating an exemplary MNR filter block, in accordance with an embodiment of the invention. Referring to FIG. 4, there is shown the pixel buffer 306, the BV MNR block 413, the temporary storage block 411, and the MNR filter 409. The MNR filter block 409 of FIG. 4 is substantially similar to the filter block 316 described in FIG. 3. The MNR filter 409 may comprise, for example, a filter block 403, a local variance block 405, and a limiter 407. The filter block 403 may comprise suitable logic, circuitry, and/or code that may be adapted to filter a portion of the image block. Filtering may be performed on completed image blocks. In some instances, when an image block corresponds to the video picture boundary, filtering may not be performed on that image block. The set of filter values to be utilized may depend on whether the video signal is progressive or interlaced.

The local variance block 405 may comprise suitable logic, circuitry, and/or code that may be adapted to determine a local variance parameter (local_var) in a portion of the image block.

The limiter 407 may comprise suitable logic, circuitry, and/or code that may be adapted to determine the MNR difference parameter based on an original pixel value from the pixel buffer 306, a filtered pixel value from the filter block 403, a relative weight parameter (m_rel), the block_var from the BV MNR block 413, and the local_var from the local variance block 405. Once determined, the MNR difference parameter for a current pixel being processed may be transferred to the combiner 312 in FIG. 3, with the output video signals from the VB XMT 322 in a format that is in accordance with the bus protocol supported by the VB.

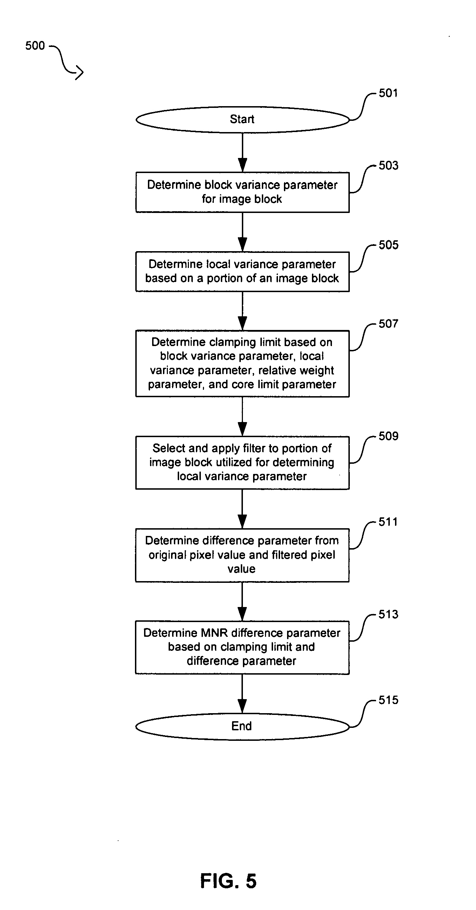

FIG. 5 is a flow diagram illustrating exemplary steps for the determination of an MNR difference parameter, in accordance with an embodiment of the invention. Referring to FIG. 5, after start step 501, in step 503, a block variance parameter may be determined for image blocks. The block variance parameter may be based on merging the block variance parameters of adjacent image blocks. In step 505, a local variance parameter may be determined based on a portion of the current image block being processed. In step 507, a clamping limit may be determined for the portion of the image block that corresponds to the local variance parameter. The clamping limit may be based on the block variance parameter, the local variance parameter, a relative weight parameter, and a mosquito core limit parameter.

In step 509, an appropriate set of filter values or filter coefficients may be selected in accordance to whether the video signal is progressive or interlaced. In step 511, a difference parameter may be determined based on the original pixel value and the filtered pixel value from step 509. In step 513, an MNR difference parameter may be determined by applying the clamping limit determined in step 507 to the difference parameter determined in step 511. After determining the MNR difference parameter for all pixels in a current video image, the exemplary steps may proceed to end step 515.

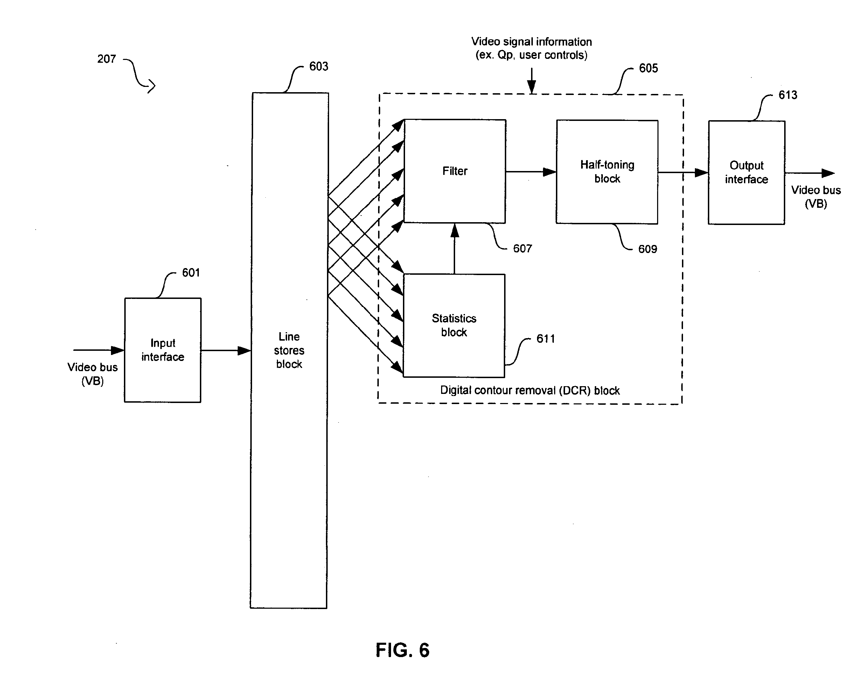

FIG. 6 is a block diagram illustrating an exemplary architecture for a digital contour removal system, in accordance with an embodiment of the invention. Referring to FIG. 6, there is shown an artifact reduction and removal block 207. The artifact reduction and removal block 207 may comprise an input interface 601, a line stores block 603, a DCR block 605, and an output interface 613. The DCR block 605 may comprise a filter 607, a half-toning block 609 and a statistics block 611.

The input interface 601 may comprise suitable logic, circuitry, and/or code that may enable receiving input video signals in a format that is in accordance with the bus protocol supported by the VB. The input interface 601 may also enable conversion of the received video images into a different format for transfer to the line stores block 603. The output interface 613 may comprise suitable logic, circuitry, and/or code that may enable assembling of noise-reduced video images from the half-toning block 609 into a format that is in accordance with the bus protocol supported by the VB. The line stores block 603 may comprise suitable logic, circuitry, and/or code that may enable conversion of raster-scanned video data from a current video image into parallel lines of video data. The line stores block 603 may enable operation in a high definition (HD) mode or in a standard definition (SD) mode, so the television may be a SD or HD television.

The DCR block 605 may comprise suitable logic, circuitry, and/or code that may enable removal of digital image contours from video images. In this regard, the DCR block 605 may enable removal of low-level contours from low-bitrate video, for example. The DCR block 605 may operate on all color components, such as, luma (Y) and chroma (Cb and Cr). The DCR block 605 may utilize, for example, 12-bit processing to internally filter contours. The DCR block 605 may utilize dither or half-toning on the contour-reduced video outputs. For example, for 10-bit video systems, the output of the DCR block 605 may be dithered to 10-bits while for 8-bit systems the output may be dithered to 8-bits. The DCR block 605 may utilize at least one dither option for processing the video outputs.

The statistics block 611 may comprise suitable logic, circuitry, and/or code that may enable collecting statistical information from at least a portion of a video image received from the line stores block 603. The statistics block 611 may process the collected statistical information and may select the appropriate digital filter size for filtering the corresponding portion of the video image. In this regard, the statistics block 611 may generate at least one signal to indicate to the filter 607 which digital filter size to utilize for smoothing the portion of the video image. The filter 607 may comprise suitable logic, circuitry, and/or code that may enable filtering of a portion of the video image received from the line stores block 603 to remove digital image contours. In some instances, the filter 607 may be implemented using a higher bit internal processing than that of the digital video output of the DCR block 605. For example, the filter 607 may be implemented in 12-bit internal processing while the output of the DCR block 605 may be 8-bit or 10-bit video. The results of the filter 607 may be transferred to the half-toning block 609.

The half-toning block 609 may comprise suitable logic, circuitry, and/or code that may enable dithering of the filtered portions of the video images transferred from the filter 607. The half-toning block 609 may enable a pass through mode where the filtered portions of the video image are not dithered. The half-toning block 609 may provide more than one output format. For example, the output of the half-toning block 609 may be 8-bit video output or 10-bit video. In this regard, the pass through mode may be enabled when the 10-bit video is selected and may be disabled when the 8-bit video is selected. The half-toning block 609 may enable more than one dithering option in processing the results of the filter 607. For example, the half-toning block 609 may provide ordered dither, random dither, and a combination of ordered and random dither.

In operation, at least a portion of a video image may be received by the input interface 601 via the VB. The input interface 601 may convert the received input video signal from the format supported by the VB to a format that enables transfer to the lines stores block 603. The line stores block 603 may store lines of the received video image and may transfer the appropriate video image information to the statistics block 611 and to the filter 607 in the DCR block 605. The statistics block 611 may select the appropriate digital filter in the filter 607 for filtering the corresponding portion of the video image by collecting and processing statistical information. The filter 607 may filter the portion of the video image to smooth out digital image contours by utilizing the digital filter size selected by the statistics block 611. The half-toning block 609 may dither the filtered portion of the video image when appropriate to achieve the proper output bit size. The output interface 613 may convert the output of the half-toning block 609 in the DCR block 605 to the format supported by the VB. Notwithstanding the description provided in FIG. 6 for the artifact reduction and removal block 207, other embodiments of the invention may be utilized for removal of digital image contours.

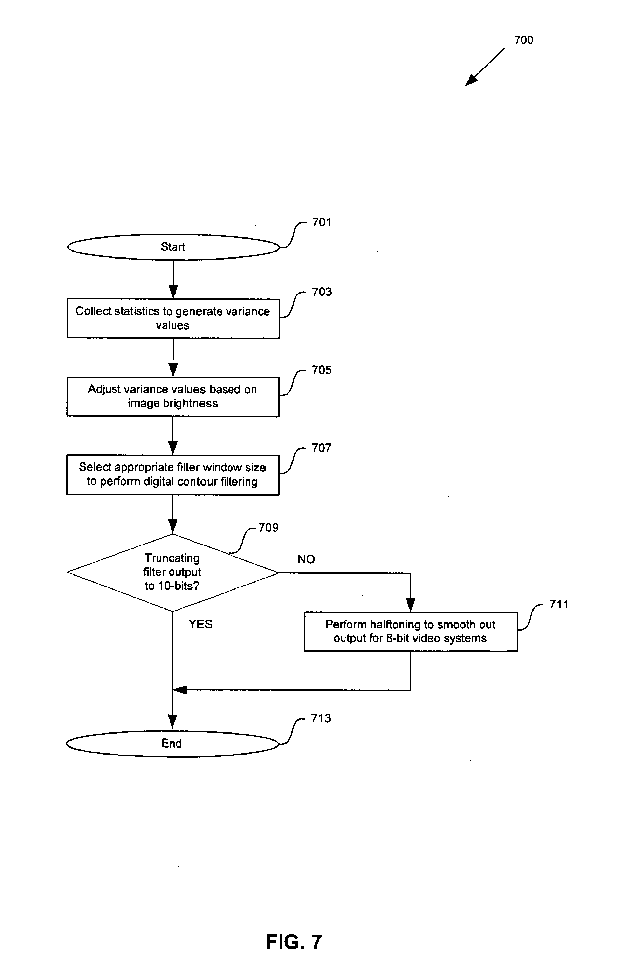

FIG. 7 is a flow diagram illustrating exemplary steps for digital contour removal in video images, in accordance with an embodiment of the invention. Referring to FIG. 7, there is shown a flow diagram 700. In step 703, after start step 701, the statistics block 611 in the DCR block 605 may collect statistical information for color components regarding pixel variances in at least one search window size for a current pixel under consideration. In step 705, a programmable offset value may be added to the luma variances in accordance with the brightness of the video image. In step 707, the statistics block 611 may select the luma filter window size and the chroma filter window size to perform digital image contour removal in the filter 607. The filter window size may be the same to the search window size. In some instances, the statistics block 611 may indicate that no filtering may be necessary on a current pixel under consideration.

In step 709, the DCR block 605 may determine whether the output of the filter 607 is to be truncated to 8-bit video or 10-bit video. When the output of the filter 607 is to be truncated to 8-bit video, the process may proceed to step 711. In step 711, the half-toning block 609 may add dither to the output of the filter 607 and may truncate the result to an 8-bit video format. After step 711, the process may proceed to step 713.

Returning to step 709, when the output of the filter 607 is to be.truncated to 10-bit video output, the half-toning block 609 may perform the truncation operation without applying dither to the output of the filter 607. The output of the DCR block 605 may be an 8-bit video or a 10-bit video. In end step 713, the output of the DCR block 605 may be transferred to an output interface to format the result in accordance with the VB bus.

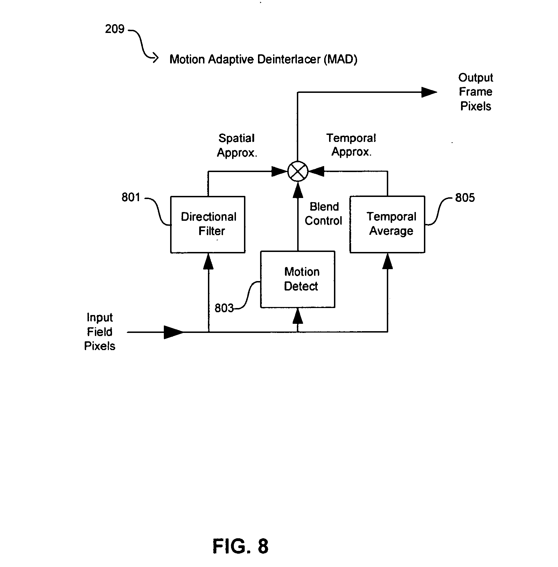

FIG. 8 illustrates an exemplary motion adaptive deinterlacer, in accordance with an embodiment of the invention. Referring to FIG. 8, the motion adaptive deinterlacer (MAD) 807 may comprise a directional filter 801, a temporal average 805, and a blender 803. The directional filter 801 may comprise suitable logic, code, and/or circuitry that may be adapted for spatially approximating the value of the output pixel. The temporal average 805 may comprise suitable logic, code, and/or circuitry that may be adapted for temporal approximation of the value of the output pixel. The blender 803 may comprise suitable logic, code, and/or circuitry that may be adapted to combine the temporal and spatial approximations of the value of the output pixel.

In operation, the MAD 209 may receive input field pixels from an interlaced video field and convert them into output frame pixels in a progressive frame, at double the display rate. The horizontal resolution of the input to the MAD 209 may change on a field-by-field basis. The MAD 209 may utilize a motion adaptive algorithm that may smoothly blend various approximations for the output pixels to prevent visible contours, which may be produced by changing decisions. In an embodiment of the present invention, it may be necessary to determine the amount of motion around each output pixel, to use an appropriate approximation for the output pixel. The MAD 209 may utilize the directional filter 801, the temporal average 805, and the blender 803 to obtain a motion-adapted value for the output pixel that is visually pleasing.

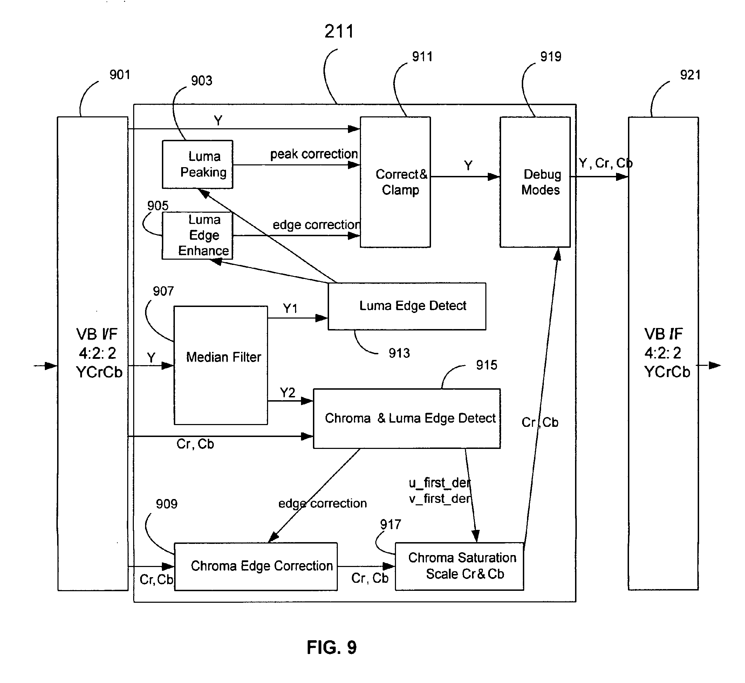

FIG. 9 illustrates a block diagram of an exemplary TAB 211, in accordance with an embodiment of the invention. The TAB 211 may comprise a luma peaking block 903, a luma edge enhance block 905, a median filter 907, a chroma edge correction block 909, a correct and clamp block 911, a luma edge detect block 1013, a chroma and luma edge detect block 915, a chroma saturation block 917, and a debug modes block 919. The functions performed by the blocks of the TAB 211 may be realized using hardware, software, or a combination thereof. The TAB 211 may be connected to other processing blocks through the interfaces 901 and 921.

The input and output of the TAB 211 may be video images in, for example, 4:2:2 $YC_rC_b$ format. In an embodiment of the invention, the TAB 211 may have a complete bypass from input to output, and the input may go through the TAB 211 unchanged and be output to the next processing block.

The TAB 211 may operate on the video content one image at a time. The TAB 211 may operate on an image pixel-by-pixel horizontally, which may be read in a raster scan manner. The pixels at the boundaries of an image may be repeated when the TAB 211 utilizes a function or filter that may extend beyond the boundaries of the image.

The luma Y of the input may be input into the median filter 907. The median filter 907 may be a selectable 1-tap, 3-tap, or 5-tap median filter. The median filter 907 may be adapted to filter out noise and may also be used for luma and chroma processing as described hereinafter. The median filter 907 may be a smoothing filter used to prevent the circuit from enhancing spot noise.

The luma edge detection block 913 and the chroma and luma edge detection block 915 may monitor the incoming $YC_rC_b$ data and search for edges. Based on the search, vertical edges may be detected. Edges may be monitored in both the luma and the chroma components, and the results may be sent to other blocks in the TAB 211 such as, for example, the chroma edge correction block 909, for processing.

The luma edge detection block 913 and the chroma and luma edge detection block 915 may calculate the luma first and second derivatives, Y' and Y", respectively. The luma edge detection block 913 may receive the luma Y as an input. The first derivative Y' may be calculated using, for example, the Sobel kernel [-1 0 1]. The first derivative may be calculated for the current pixel, and for the pixel to the left and the pixel to the right of the current pixel, the values of which may be used in processing in other blocks in the TAB 211. The first derivatives may be calculated as follows using the Sobel kernel, where value_y[n] is the value of the current pixel, value_y[n-1] is the value of the pixel to the left of the current pixel, value_y[n+1] is the value of the pixel to the right of the current pixel, and so on:

$$*first\_der\_left = value\_y[n-2] - value\_y[n];$$

$$*first\_der = value\_y[n-1] - value\_y[n+1];$$

and

$$*first\_der\_right = value\_y[n] - value\_y[n+2].$$

The second derivative may be calculated using, for example, a standard Laplacian as follows:

$$second\_der = -value\_y[n-1] + 2*value\_y[n] - value\_y[n+1].$$

The luma edge detection block 1013 may utilize the first and second derivatives of the luma to detect edges.

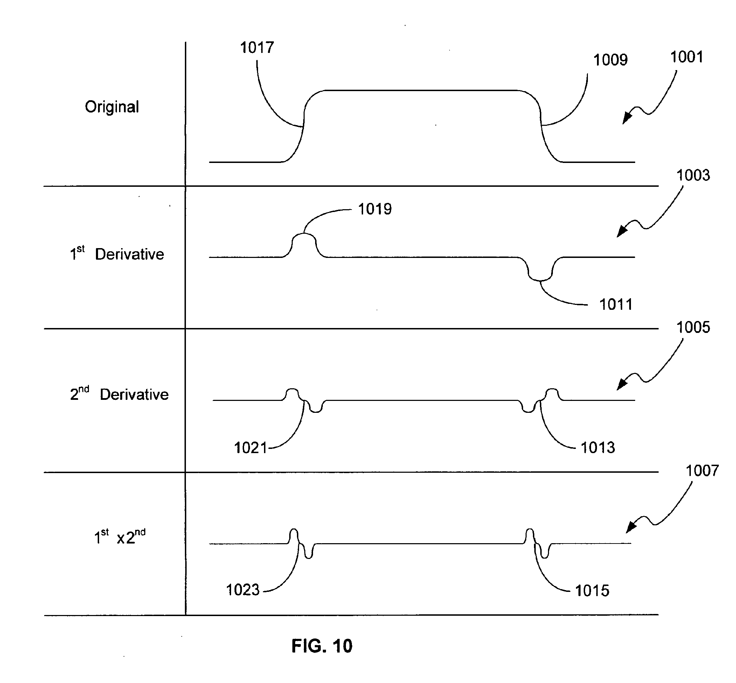

FIG. 10 is a diagram illustrating first and second derivatives plots associated with an exemplary edge, in accordance with an embodiment of the invention. Referring to FIG. 10. illustrates first and second derivatives plots associated with an exemplary edge, in accordance with an embodiment of the present invention. The original signal 1001 may have two edges 1009 and 1017. The first derivative 1003 may give two peaks 1011 and 1019 indicating the location of the edge 1009 and 1017, respectively, in the original signal 1001. Taking the second derivative 1005 then yields a zero 1013 and 1021 at the location of the two peaks 1011 and 1019, respectively, of the first derivative 1003, indicating the location of the edge 1009 and 1017, respectively, in the original signal 1001. Using the second derivative 1005 by itself to indicate whether a current pixel is on the left or the right, positive or negative, may not yield accurate results, since large edges may have large transition regions, and as such may yield a larger flat region where the second derivative is zero. The improvement to the edge may be needed in a small portion in the middle of the flat region, and multiplying the first derivative 1003 by the second derivative 1005 may yield a resulting plot 1007, where the flat region may be reduced to a small location 1015 and 1023 within which the edge where the enhancement may be needed may be located. Additionally, in the plot 1007 of the product of the first derivative and the second derivative, when a pixel is in the region where the product is positive, then the pixel is to the left of an edge, and when the pixel is in the region where the product is negative, then the pixel is to the right of the edge.

Referring back to FIG. 9, the chroma and luma edge detection block 915 may receive the luma Y as an input, and the $C_r$ and $C_b$ values. The outputs of the luma edge detection block 913 and the chroma and luma edge detection block 915 may be used by the chroma edge correction block 909. The chroma edge correction block 909 may also receive as an input the $C_r$ and $C_b$ values.

The chroma edge correction block 909 may enhance the chroma edges. The luma edge detection block 913 and the chroma and luma edge detection block 915 may provide information regarding the strength of the edge associated with the current pixel, whether the current pixel is to the left or right of the edge, and how close the current pixel is to the center of the edge. The chroma edge correction block 909 may process incoming pixels every other sample when the content is in the 4:2:2 space, and every sample if the content is in the 4:4:4 space. The chroma and luma edge detection block 915 may provide to the chroma edge correction block 909 the luma edge (edge_y), the $C_r$ edge (edge_u) and the $C_b$ edge (edge_v). The values for edges may be calculated as follows:

| | |
|---|---|
| y_first_der may use [-1, -1, 0, 1, 1]; | // first derivative of Y |
| y_second_der may use [-1, 0, 2 , 0, -1]; | // second derivative of Y |
| u_first_der may use [-1, 0, 1]; | // first derivative of $C_r$ |
| u_second_der may use [-1, 2, -1]; | // second derivative of $C_r$ |
| v_first_der may use [-1, 0, 1]; | // first derivative of $C_b$ |
| v_second_der may use [-1, 2, -1]; | // second derivative of $C_b$ |

edge_y = (y_second_der * (-1 *y_first_der))/4;
edge_u = (u_second_der * (-1 *u_first_der)); and
edge_v = (v_second_der * (-1 *v_first_der)).

The parameters edge_y, edge_u, edge_v may then be combined to determine the amount of edge correction that may be needed:

```
if (disable_chroma_luma) {edge_y = 0;}
if (disable_chroma_chroma) {edge_u = 0; edge_v = 0;}
edge_correction - (edge_y + edge_u + edge_v)/64;
```

where disable_chroma_luma may be a one-bit value indicating whether chroma and luma edges need to be aligned, and "1" may disable chroma alignment to luma edges. Similarly, disable_chroma_chroma may be a one-bit value indicating whether chroma edges need to be aligned, and "1" may disable chroma alignment to chroma edges. And edge_correction may be the amount of chroma edge correction needed.

The value of the edge_correction may then be used to choose one of eight filters to correct the values of $C_r$ and $C_b$ such that the edge of the chroma may get aligned with the luma edge. The filters used in the chroma edge correction block 909 may be 5-tap filters, and the coefficients of the filters may be programmable.

The chroma edge correction block 909 may then apply the appropriate filter to get $C_r$ and $C_b$ values that enhance the chrominance resolution by improving edges at chrominance transitions. The filter applied by the chroma edge correction 909 may be configured so that when an edge is not detected near a current pixel, the filter used may be one that has a center tap with some positive value, and zeros for the rest of the taps, and as such, the pixel may go through unchanged. Then, when an edge is detected to the right of the current pixel, i.e. the current pixel may be to the left of the edge, the taps of the filter may have more weight to the right of the center tap, and as a result the chroma may be pushed more to the right, thereby sharpening the chroma edge. The luma edge may be also corrected in a similar fashion. The resulting luma and chroma components may be blended together to get the desired overall edge enhancement effect.

The chroma edge correction block 909 may then output the corrected values for $C_r$ and $C_b$, which may be the input to the chroma saturation block 917. The chroma saturation block 917 may also receive as inputs, the first derivatives for the chroma values, u_first_der and v_first_der, from the chroma and luma edge detection block 1015.

The chroma edge correction block 909 may scale the $C_r$ and $C_b$ values by the same scaling factor. As a result, the color may be saturated at the edges without changing the hue. This may be visibly better than processing the Cr and Cb values independently, which may cause changing the hue at the edges, and be visibly objectionable.

In an embodiment of the invention, the chroma saturation function may have a range of values for the chroma saturation. A maximum value within the range of chroma saturation values may be programmable. The chroma saturation function may produce the new saturated $C_r$ and $C_b$ values.

In an embodiment of the invention, a chroma clamp function may be utilized to check for overflow or underflow in the corrected chroma values. The chroma clamp function may control the values of the chroma components utilizing a maximum chroma and minimum chroma values. For example, if the new chroma value is less than a minimum chroma value, the chroma clamp function may force the chroma value to the minimum value, and similarly, if the new chroma value is greater than a maximum chroma value, the chroma clamp function may force the chroma value to the maximum value.

The chroma saturation block 917 may then output the new $C_r$ and $C_b$ values, which may be input into the debug modes block 919.

The luma edges may be sharpened using a blend of peaking and edge enhancement. The output of the luma edge detection block 913 may be input into the luma peaking block 903 and the luma edge enhance block 905. The luma peaking block 903 may provide a filter that enhances the high frequency terms, and as such sharpens the edges, without cutting out or affecting other frequency terms, for example, the DC values remain at DC. The overall effect of the filter in the luma peaking block 1003 may be to undo the effects of blurring, which may have been the result of low-pass filtering that may have attenuated some high frequency terms.

The luma peaking block 903 may utilize the second derivative of the luma, which it may receive from the luma edge detection block 913. The luma peaking block 903 may peak values of the luma to give an effect of a sharper edge. For example, at an edge the luma may be higher on one side of the edge and lower on the other side, and hence, if the colors around the edge were gray the one with the higher luma value would look lighter than the other. The luma peaking block 903 may make the higher luma value higher and the lower luma value lower, and as such the lighter gray side would become lighter and the darker gray side would become darker, and effectively, the edge become sharper. The luma peaking block 903 may calculate the corrected peaking values as follows:

```
peak_correction = second_der * PEAK_SETTING; //needed peak correction
amount
peak_correction >>= PEAK_SCALE;
if (abs(peak_correction) < PEAKCORE) {peak_correction = 0;}
```

where PEAK_SETTING ranges in value between [0,15] and may control the amount of peaking, where "0" may disable peaking. PEAK_SCALE may be one of [1,2,3,4], and PEAKCORE may be a value between [0,255] and may indicate the coring value for peaking.

The luma edge enhance block 905 may use the first derivative of the luma, which it may receive from the luma edge detection block 913. The luma edge enhance block 905 may add enhancement to the side of the edge with the larger luma value. The following code fragment may utilize the first derivative of the luma to verify that the side of the edge with the larger luma value is enhanced:

```
if (first_der > 0) {
      edge_correction = abs(first_der_right);
} else {
      edge_correction = abs(first_der_left);
```

Scale & core:

```
edge_correction *= EDGE_SETTING;
edge_correction >>= EDGE_SCALE;
if (edge_correction < EDGECORE) {edge_correction = 0;}
if (edge_correction > EDGEMAX) {edge_correction = EDGEMAX;}
```

where EDGE_SETTING ranges in value between [0,15] and may control the amount of edge enhancement, where "0" may disable enhancement. EDGE_SCALE may be one of [1,2,3,4,5,6], and EDGECORE may be a value between [0,255] and may indicate the coring value for edge enhancement. EDGEMAX may set the maximum edge enhancement and may be a value in the range [0,255].

The luma peaking and the luma edge enhancement may then be blended together in the correct and clamp block 1011, to get the new and correct luma value. The blending may be done by first applying peak correction as follows:

```
new_luma = original_luma + peak_correction;
```

overshoot and undershoot may be limited relative to neighboring pixels, and clamped as follows:

```
max_luma = max(value_y[n-1], value_y[n], value_y[n+1])+ OVERSHOOT;
if (new_luma > max_luma) {new_luma = max_luma}
min_luma = min(value_y[n-1 ], value_y[n], value_y[n+1]) - OVERSHOOT;
if (new_luma < min_luma) {new_luma = min_luma}
```

Edge correction may then be applied as follows:

```
new_luma += edge_correction.
```

The new_luma may then be clamped to get the final new_luma value. Overshoot/undershoot may be controlled by a shoot setting with a value in the range [0,255], where "0" means no overshoot.

The new luma value may then be output by the correct and clamp block 209 and input into the debug modes block 919. The debug modes block 919 may also receive the new chroma ($C_r$ and $C_b$) values from the chroma saturation block 1017. The debug modes block 919 may check the new luma and chroma values and display an error term or an edge map based on the results. The error term may be displayed by forcing the $C_r$ and $C_b$ values to zero, hence forcing the chroma to gray, and forcing Y to display:

$$Y = (128 + original\_luma - new\_luma);$$

the resulting luma value may then be clamped to the range [1,254]. The edge map may be displayed by forcing the $C_r$ and $C_b$ values to zero, hence forcing the chroma to gray, and forcing Y either to 1 if the error term is equal to zero, or to 254 if the error term is not equal to zero.

Certain embodiments of the invention may comprise a method and system for providing a video interface between a handheld video player 106 and a television are disclosed. Aspects of the method may comprise activating a video processing interface 200 that enables processing of input video signals in a decompressed format suitable for display on the handheld video player 106. The processing may comprise compression artifact reduction. One or more circuits such as the video decoder 203, the DNR block 205, the DCR block 207, the MAD block 209, the TAB block 211, and the display image block 213 may be utilized to generate corresponding output video signals suitable for display on the television 100. The input signal may be received via a dedicated connector 103 which may be labeled on the television 100. The activation of the video processing interface 200 may utilize a menu selectable software button or a hardware selector video input button. Notwithstanding, the video processing interface 200 may be adapted to automatically detect and process signals once they are received. The processing of the video input signal may comprise noise reduction using the digital noise reduction (DNR) block 205. The digital noise reduction may comprise mosquito noise reduction by the MNR block 316 and/or block noise reduction utilizing the BNR blocks 308, 310. The video signal processing may further comprise digital contour noise reduction using the digital contour noise reduction (DCR) block 207, deinterlacing by the motion adaptive deinterlace (MAD) block 209, and image sharpening by the transient adjustment block (TAB) block 211.

Certain embodiments of the invention may comprise a machine-readable storage having stored thereon, a computer program having at least one code section for communicating information within a network, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

**Claims**

1.  A method for providing a video interface between a handheld video player and a television, the method comprising:

    activating a video processing interface that enables processing of input video signals in a decompressed analog format from said handheld video player; and
    generating, from said input video signals, corresponding output video signals suitable for display on a television, wherein said input video signals are received via a dedicated connector on said television.

2.  The method according to claim 1, comprising activating said video processing interface utilizing at least one of: a menu selectable software button or a hardware selector video input button.

3.  The method according to claim 1, wherein said dedicated connector is labeled on said television.

4.  The method according to claim 1, comprising processing said input video signals utilizing Digital Noise Reduction (DNR).

5.  The method according to claim 4, wherein said DNR comprises Mosquito Noise Reduction (MNR).

6.  The method according to claim 4, wherein said DNR comprises Block Noise Reduction (BNR).

7.  A system for providing a video interface between a handheld video player and a television, the system comprising:

    a video processing interface that enables processing of input video signals in a decompressed analog format suitable for display on said handheld video player; and
    one or more circuits that generate, from said input signals, output video signals suitable for display on a television wherein said input video signals are received by a dedicated connector on said television.

8.  The system according to claim 7, comprising at least one of: a menu selectable software button or a hardware selector video input button.

9.  The system according to claim 7, wherein said dedicated connector is labeled on said television.

10. The system according to claim 7, comprising circuitry for digital noise reduction on said input video signal.

100

106                    101

Personal Video
Player

103        105

FIG. 1

200

203          205          207          209          211          213

| NTSC (PAL) Video Decoding | DNR– Digital Noise Reduction (Mosquito Noise) | DCR– Digital Contour Noise Reduction | MAD– Motion Adaptive Deinterlace | TAB– Sharpen image | Display Image |

Video Player Input ⌐201

**FIG. 2A**

EP 1 933 556 A2

250

| NTSC (PAL) Video Decoding 203 | → | DNR– Digital Noise Reduction (Mosquito Noise) 205 | → | DCR– Digital Contour Noise Reduction 207 | → | MAD– Motion Adaptive Deinterlace 209 | → | TAB– Sharpen image 211 | → To Television or Monitor |

Video Player Input  201

FIG. 2B

EP 1 933 556 A2

FIG. 4

**FIG. 3**

500

501

Start

503

Determine block variance parameter
for image block

505

Determine local variance parameter
based on a portion of an image block

507

Determine clamping limit based on
block variance parameter, local
variance parameter, relative weight
parameter, and core limit parameter

509

Select and apply filter to portion of
image block utilized for determining
local variance parameter

511

Determine difference parameter from
original pixel value and filtered pixel
value

513

Determine MNR difference parameter
based on clamping limit and
difference parameter

515

End

FIG. 5

FIG. 6

700

701
Start

703
Collect statistics to generate variance values

705
Adjust variance values based on image brightness

707
Select appropriate filter window size to perform digital contour filtering

709
Truncating filter output to 10-bits?

NO

711
Perform halftoning to smooth out output for 8-bit video systems

YES

713
End

**FIG. 7**

FIG. 8

FIG. 9

FIG. 10

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 929628 A
- US 945756 A
- US 087491 A